# EUROPEAN PATENT SPECIFICATION

(11) **EP 0 972 394 B1**
(45) Date of publication and mention of the grant of the patent: **03.12.2003**
(21) Application number: 98914185.8
(22) Date of filing: 20.03.1998
(51) Int. Cl.: H04M 3/22, H04L 12/64, H04L 12/66, H04M 7/00, H04M 3/00

(54) **INTERCONNECTION OF TELEPHONE EXCHANGES VIA A COMPUTER NETWORK**
VERBINBUNG VON FERNSPRECHVERMITTLUNGSANLAGEN ÜBER EIN COMPUTERNETZWERK
INTERCONNEXION DE CENTRAUX TELEPHONIQUES VIA UN RESEAU D'ORDINATEURS

(30) Priority: 31.03.1997 US 828546
(43) Date of publication of application: 19.01.2000
(73) Proprietor: TELEFONAKTIEBOLAGET L M ERICSSON (publ), 126 25 Stockholm (SE)
(72) Inventor: ANDREASON, Tomas, S-135 40 Tyresö (SE)
(74) Representative: Lövgren, Tage
(86) International application number: SE9800509
(87) International publication number: WO98044703

(56) References cited:
- WO-A-93/15583
- WO-A-96/20553
- WO-A-97/16916
- WO-A-97/47114
- US-A- 4 866 704
- US-A- 4 903 261
- US-A- 5 115 431

## Description

### TECHNICAL FIELD

The present invention relates to the interconnection of telephone exchanges with the use of a computer network and more particularly to the connection of telephone calls between exchanges via a computer network.

### STATE OF THE ART

Computer networks in the form of internet and intranets are in widespread use and the possibility of transmitting voice over computer networks such as the internet has become more and more popular because of the low price on using the internet. Many companies also have intranets for communication between computers in the company. Many of these companies also have two or more telephone exchanges interconnected by leased lines or the public switched telecommunications network.

W096/20553 is mainly concerned with a system of transmitting voice mail and electronic mail messages in a computer network. In one part of the document there is however described how the internet can be used to set up a telephone link between two subscribers. The link goes from one subscriber to a first internet service provider via a first local public switched. telephone network, then continues to a second internet service provider via the internet, from which second internet service provider the link continues to the second subscriber via a second public switched telephone network. Access to the internet is here always provided by an internet service provider.

In a Brochure "An introduction to distributed multimedia networks", by Harvey Kaufman, Netspeak Corporation, a telecommunication system is shown including telephone exchanges in the form of private branch exchanges (PBX) which are interconnected both by a public switched telephone network (PSTN) and by computer networks. The private branch exchanges are here connected to the computer networks through external gateways (WGX). The description is very short and it is not clear how speech connections between exchanges are set up via the computer network. In order to set up a speech connection a PBX would first have to use trunk signalling with a first gateway in order to set up a connection to it, the first gateway would then communicate with a second gateway over the computer network and the second gateway would set up a telephone connection with a receiving PBX. This would constitute an inflexible system and a lot of double work for operation and maintenance of both gateways and exchanges. The exchanges also have difficulties in monitoring the quality of the traffic over the computer network and react on such information.

The telecommunications standard ITU-T H.323 describes different protocols for conversion of speech to data packets in a gateway and vice versa.

The Swedish Patent application No. SE 9602918-6, filed 2 August 1996, which is identical to US provisional application "Method and Arrangement for Connection Between a Computer Network and a Telecommunication Network", filed August 12, 1996, describes how two private branch exchanges can use the internet for setting up compressed voice calls between them, each using a modem connected to the backplane or switch core of the PBX.

The international patent application No. WO93/15583 discloses a telecommunications system in which two private networks are to be interconnected via a public network. Separate signalling and transmission network bearers are used. Each of the private networks are connected to an interworking unit performing necessary- protocol changes between the private and public networks.

### SUMMARY OF THE INVENTION

The present invention concerns a problem of how to reduce the cost of interconnecting two or more telephone exchanges by using a data communication network while at the same time obtaining efficient surveillance and service of the channels set up between the exchanges over the computer network and of the network addresses used.

This problem is solved by including, in at least one exchange to be connected, at least one network connection device for communication with other network connection devices in the other exchanges or with gateways connected to the other exchanges, where a network connection device sets up a bi-directional data packet connection as a signalling channel to another exchange via a gateway or another network connection device, and the switch control means of the exchanges perform signalling over this channel. At least one network connection device in an exchange applies a signal structure suitable for telephony over the computer network to received speech signals for producing data packets containing telephony and sends the data packets containing telephony to the other network connection device over the signalling channel or over a traffic channel set up between the exchanges over the computer network using signalling over the signalling channel. The switch control means in an exchange also comprises monitoring means arranged to survey and service the network connection device in the same exchange.

The object of the invention is thus to obtain a telephone exchange, a telephone system comprising such an exchange and a method of transmitting signals that reduces the cost of interconnecting two or more telephone exchanges by using a data communication network while at the same time enabling efficient surveillance and service of the channels set up between the exchanges over the computer network and the network addresses used.

This is achieved by a telephone exchange and a telephone system including such an exchange, where the exchange comprises a switch core, a switch control means responsible for setting up connections between users of the exchange and at least one network connection device connected between the switch core and a gate of the exchange for communication with at least one other exchange via a gateway or via at least one other network connection device.

At least one of the network connection devices in the exchange sets up, together with the gateway or the other network connection device, a bi-directional data packet connection as a signalling channel between the switch control means of the exchange and a switch control means of the other exchange via the computer network,
sends signalling information over this signalling channel,
applies a signal structure suitable for telephony over the computer network to speech signals received from the switch core in order to produce data packets containing telephony, and
sends the data packets containing telephony to the other network connection device over the signalling channel or over a traffic channel that has been set up between the exchanges via the computer network using signalling over the signalling channel.
The switch control means also comprises monitoring means that surveys and services the network connection device.

This is also achieved by a method comprising the steps of:
setting up a bi-directional data packet connection as a signalling channel between the exchanges via the computer network,
performing signalling between the exchanges over the signalling channel,
applying a signal structure suitable for telephony over the computer network to telephone signals to be sent from the first exchange to the second exchange,
packing the telephone signals having said structure in packets,
sending said packets from the first exchange to the second exchange over the signalling channel or over a traffic channel that has been set up between the two exchanges via the computer network in dependence of signalling performed over the signalling channel, and
surveying and servicing, in at least one of the exchanges, channels between the exchanges.

The object is also achieved by a telephone exchange and a telephone system comprising a switch core, a switch control means responsible for setting up connections between users of the exchange and at least one network connection device connected between the switch core and a gate of the exchange for communication with at least one other exchange via a gateway or via at least one other network connection device.

At least one of the network connection devices in the exchange sets up, together with the gateway or the other network connection device, a bi-directional data packet connection as a signalling channel between the switch control means of the exchange and a switch control means of the other exchange via the computer network,
sends signalling information over this signalling channel,
receives, over the signalling channel or over a traffic channel set up between the exchanges via the computer network using signalling over the signalling channel, data packets containing telephony from the other network connection device,
removes a signal structure suitable for telephony from the content of said data packets for obtaining speech signals, and
sends the speech signals to the switch core for transmittal to a user connected to the exchange.
The switch control means also comprises monitoring means arranged to survey and service the network connection device.

The object is also achieved by a method comprising the steps of: setting up a bi-directional data packet connection as a signalling channel. between the exchanges via the computer network,
performing signalling between the exchanges over the signalling channel,
receiving, in the second exchange, data packets sent from the first exchange over the signalling channel or over a traffic channel that has been set up between the two exchanges via the computer network in dependence of signalling performed over the signalling channel,
removing a signal structure suitable for telephony over the computer network from the received packets in order to obtain speech signals,
sending the speech signals to a user connected to the second exchange, and
surveying and servicing, in at least one of the exchanges, channels set up over the computer network.

The present invention has several advantages. It reduces the cost for setting up telephone connections by using an existing computer network for telephony. The exchange according to the invention can monitor, survey and service channels set up over the computer network. In this way all monitoring functions used for channels in a normal telephone network can be used for channels over the computer network.

A very flexible way of interconnecting exchanges can be obtained, that can easily be reorganised by way of adding and removing exchanges to communicate with and by increasing and reducing the number of channels between exchanges by only modifying the setting of computer network addresses and port numbers to be used in an exchange.

A traffic channel or the signalling channel when used as a traffic channel are not channels in the ordinary sense. They preferably use UDP (unreliable datagram protocol). The channels then are connection-less type of connections. These channels do thus not have any relation to channels in time slots and channels of that type. The switch control means does however treat them as these ordinary traffic channels.

The invention will now be described in more detail with reference to preferred embodiments and to the enclosed drawings.

### BRIEF DESCRIPTION OF THE DRAWINGS

Fig. 1 shows a block schematic of a telephone system according to the invention comprising two telecommunication exchanges connected to each other via a computer network,
fig. 2 shows a block schematic of a computer network connection device in an exchange,
fig. 3 shows a flow chart of a method for setting up channels to be used for signalling and telephone signals between exchanges in the telephone system,
fig. 4 shows a flow chart of a method used by an exchange for sending telephone signals over the computer network, and
fig. 5 shows a flow chart of a method used by an exchange for receiving telephone signals over the computer network.

### DETAILED DESCRIPTION OF PREFERRED EMBODIMENTS

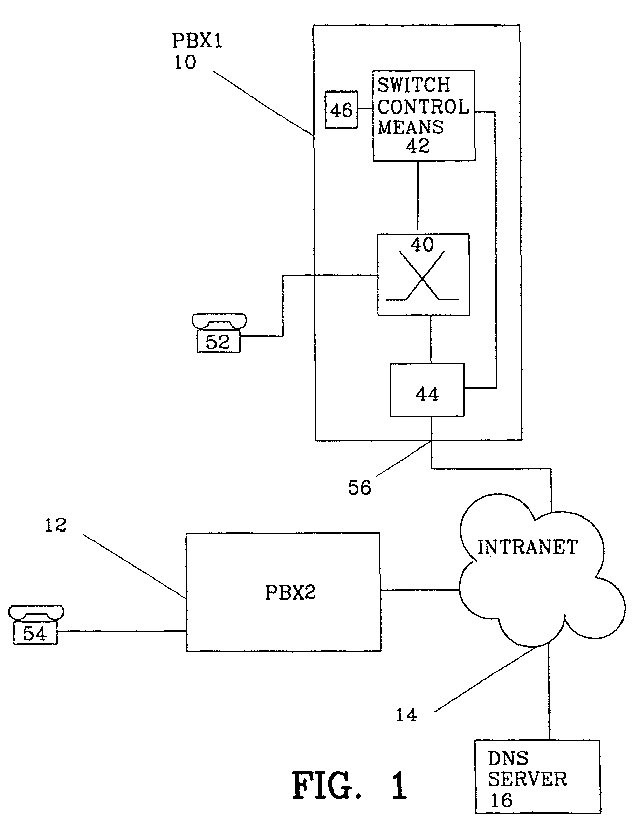

In fig. 1 is shown a telephone system according to the invention comprising two telephone exchanges 10 and 12, for example in the form of private branch exchanges, which are interconnected by a computer network 14, which network in this embodiment is an intranet. It shall be understood that the system can include more telephone exchanges, each connected to the intranet. The computer network is also not limited to an intranet but also internet is possible as well as various types of local networks or combinations of intranet and internet so that exchanges connected to the internet can get connected to the intranet of a company. The system is also not limited to private branch exchanges.

A first of the exchanges 10 PBX1 comprises a switch control means 42 connected to a switch core 40 and to a network connection device 44, where the network connection device 44 is connected between the switch core 40 and a gate 56 for connection to the computer network 14. The switch core 40 is connected to a first extension 52 (shown outside the exchange). The switch control means 42 comprises a monitoring means 46 arranged for surveying and servicing the network connection device. A second of the exchanges PBX2 12, which is identical in structure to the first exchange and is therefore shown as an empty box, is also connected to the computer network and has a second extension 54 connected to itself. The extensions could also be replaced by subscribers in a public switched telephone network (PSTN) who get connected to a private branch exchange via said PSTN. What happens with the two private branch exchanges in the preferred embodiment is that they set up traffic channels either in the form of channels on a per call basis or in the form of simulation of a trunk line between each other via the intranet 14. This can be very advantageous especially for big companies that have a number of different private branch exchanges at different locations and at the same time have an intranet interconnecting computers within the company at the same locations. With the present invention telephone calls can be set up between private branch exchanges in a company using an already existing intranet, which leads to the saving of leased lines and perhaps of savings in avoiding the use of the public switched telephone network (PSTN). A DNS (Domain Name System) server 16 is also connected to the intranet 14.

The first exchange 10 can comprise several network connection devices 44. Each device could be dedicated to communication with a separate exchange or could be dedicated to communication with several exchanges. More than one network connection device could also be dedicated to communication with one exchange. The main part of the description and the figures will however only be limited to one network connection device for simplicity. The number of network connection devices in the exchange and the number dedicated to each other exchange could be determined by expected traffic between the exchanges.

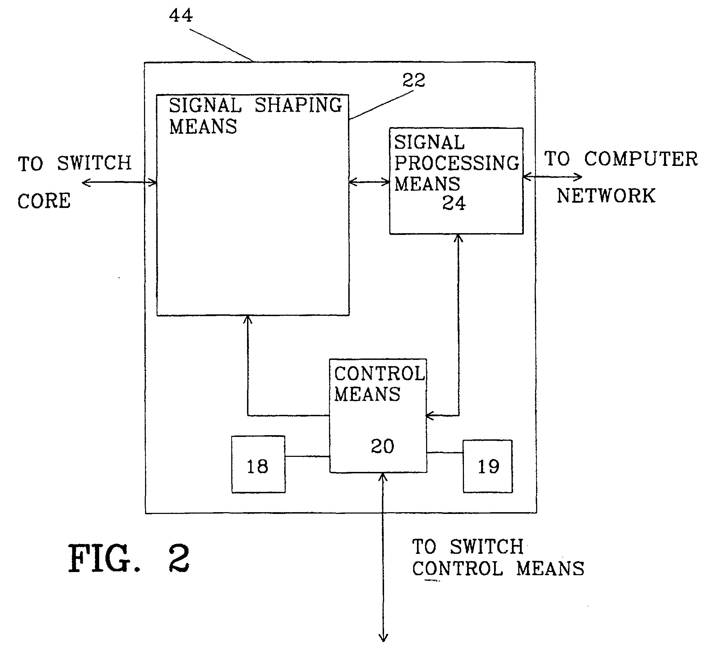

In fig. 2 is shown a network connection device 44 according to the invention. The network connection device 44 comprises a signal shaping means 22 connected to the switch core of the exchange, a signal processing means 24 connected between the signal shaping means and the gate and a local control means 20 connected to the switch control means as well as to the signal shaping means 22 and the signal processing means 24. A signalling channel store 18 and a traffic channel store 19 are connected to the local control means 20. The network connection device 44 is preferably realised in the form of a processor having various memories and registers connected to it.

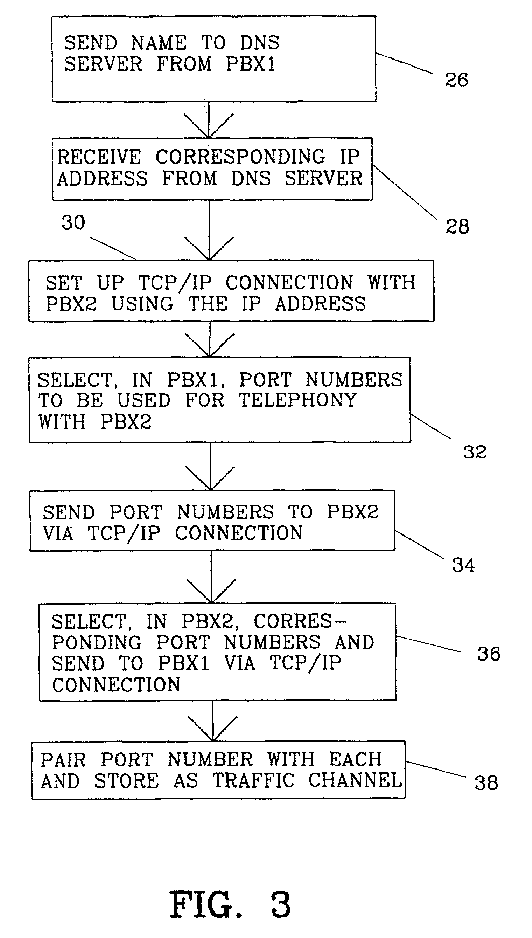

Fig. 3 shows a method for initially setting up channels between exchanges of the telephone system in order to simulate a trunk over the computer network.

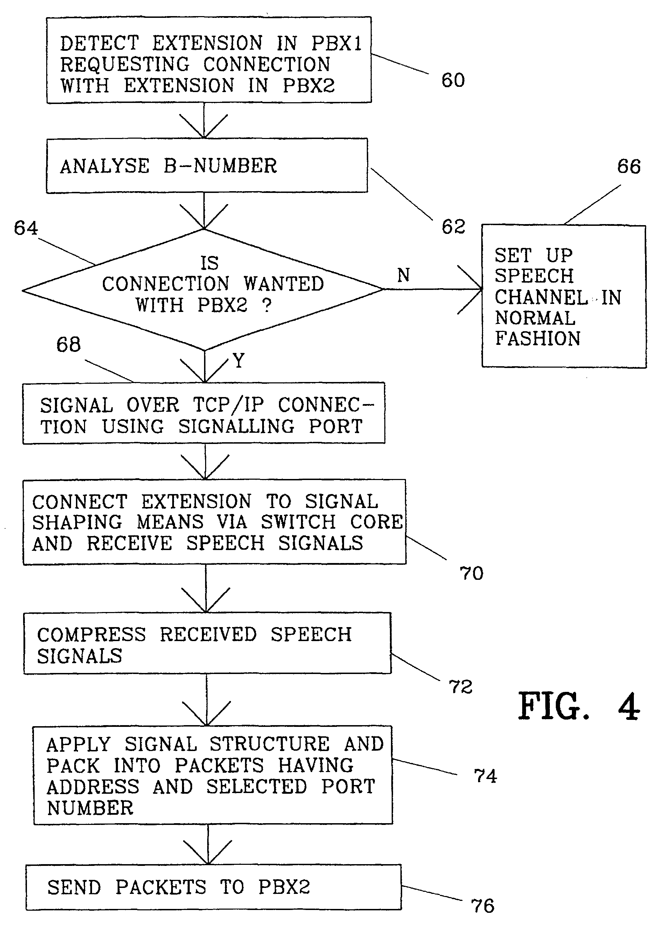

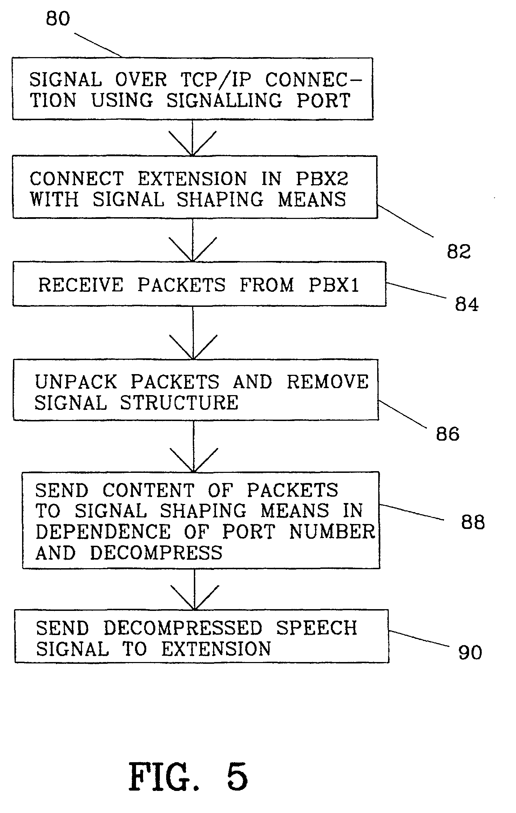

Fig. 4 shows a flow chart of the method according to which an exchange sending packets is working and fig. 5 shows a flow chart of the method according to which an exchange receiving packets is working.

The functioning of the system according to the invention will now be described with reference to fig. 1, 2, 3, 4 and 5.

The initial setting up of channels according to an embodiment of the invention will now be described with reference to fig. 1, 2 and 3. Before starting up the system according to the invention for the first time, the local control means 20 of the network connection device 44 in the first exchange PBX1 has a port number stored in the signalling channel store 18, which port number is a signalling port number and is to be used for signalling with other network connection devices. This port number is universal in the sense that all exchanges are to use this particular port number when sending data packets containing signalling information. Port numbers are here the equivalent of TSAP identifiers that are described in the telecommunications standard ITU-T H.323. The signalling channel store 18 also includes a name associated with each other exchange or with each other computer network address of such an exchange to which it can be connected. The network connection device 44 of the first exchange PBX1 also stores a computer network address of the DNS server 16 as well as an own computer network address that other exchanges are to use when communicating with the first exchange PBX1, which addresses are also stored in the signalling channel store 18. Each other exchange that the first exchange PBX1 can be connected to through the computer network 14 must therefore comprise at least one network connection device having an own computer network address as well as a computer network address in the form of an IP (Internet Protocol) address for the DNS server 16.

What happens when starting up the system is that, with reference to fig. 1, 2 and 3, the switch control means 42 in the first exchange PBX1 sends an order to the local control means 20 to set up signalling channels. The local control means then sets the signal processing means 24 to receive information from the local control means 20, to apply a signal structure suitable for sending data over the computer network, such as TCP (Transmission Control Protocol), and to send data packets according to established standards known to the man skilled in the art to the DNS server 16 using the computer network address of the DNS server 16, which address has been fetched from the signalling channel store 18. Each such packet sent to the DNS server 16 contains the name of another exchange to which the first exchange wants to connect itself to, procedural step 26. This name has also been fetched from the signalling channel store 18. The DNS server 16 contains a table which translates each such name to a corresponding computer network address. The DNS server 16 then translates the name to a network address and returns this address to the first exchange PBX1, procedural step 28. The signal processing means 24 receives this packet, removes the data structure and sends the content, i.e. the computer network address, to the local control means 20. The local control means 20 then stores this address in the signalling channel store 18 and associates it with the name and informs the switch control means 42 that a signalling channel is set up. The first exchange PBX1 has then received a computer network address to each other exchange it can be connected to, in this case only the address of the second exchange PBX2. The second exchange PBX2 performs the same routine in order to receive the computer network address of the first exchange. In this way a bi-directional data packet connection is set up as a signalling channel over which signalling can later be performed, procedural step 30.

Once this signalling channel has been set up, the two exchanges go on and set up a "trunk line". This is done through exchanging data packets via the bi-directional data packet connection. The switch control means 42 in the first exchange PBX1 orders the local control means 20 to set up a number of traffic channels. The number it chooses are normally the same number as the number of possible channels in an ordinary trunk line, but fewer or more channels are of course possible. The local control means 20 has a number of additional port numbers in storage in the traffic channel store 19 intended for use by other exchanges when sending packets to the first exchange. It selects, for each other exchange to which traffic channels are to be set up, a separate set of port numbers from the ones in the traffic channel store 19 to be used by the other exchange for channels, procedural step 32. In the described embodiment only one other exchange is included in the system so port numbers are chosen for that exchange only. Each set of port numbers are then sent to the corresponding exchange via the respective bi-directional data packet connection, procedural step 34. In the present example only one other exchange, the second exchange PBX2, is included in the system, so the first exchange PBX1 sends the port numbers to it via the bi-directional data packet connection, i.e. in data packets having the IP address of the network connection device of the other exchange and the predetermined signalling port number. Each such other exchange receiving these sets of port numbers selects a corresponding set of port numbers from its traffic channel store and pairs each port number in this corresponding set with a port number of the received set and stores each pair in its traffic channel store. Thereafter the corresponding set is sent to the first exchange, procedural step 36, and this exchange also performs this pairing and stores each pair as a traffic channel in the traffic channel store 19, procedural step 38. Finally the local control means 20 notifies the switch control means 42 that the traffic channels are set up.

What happens when a telephone call is to be set up is thereafter first, with reference to fig. 1, 2 and 4, that a user of the first exchange PBX1 at the first extension 52, wants to call the second extension 54 of the second exchange PBX2. He therefore lifts the phone and dials the number of the second extension. This is detected by the switch control means 42 in the first exchange PBX1, procedural step 60. The switch control means then analyses the dialled number, the so called B-number, procedural step 62. If the number was a number not associated with the second exchange PBX2, procedural step 64, the switch control means 42 sets up a speech channel in a normal fashion, procedural step 66, like for example via the PSTN. In our case the number was however a number associated with PBX2 and the switch control means 42 keeps track of all numbers associated with the other exchange. The connection was in this case wanted with PBX2, procedural step 64, and the switch control means therefore communicates with the local control means 20 in the network connection device 44 in the first exchange PBX1 in order to connect a telephone call.

Signalling information is sent from the switch control means 42 to the local control means 20 in the first exchange 10. This signalling information is for example sent according to the protocol ECMA/ISO QSIG or some other suitable protocol and a traffic channel is selected through this signalling. The local control means 20 sets the signal processing means 24 to apply a signal structure suitable for data communication, for example TCP, and supplies the signal processing means 24 with the previously mentioned IP-address and predetermined signalling port number to be used for communication with the network connection device in the second exchange PBX2. The signal shaping means packs this signalling information in packets having above mentioned IP-address and port number and sends it to a respective signal processing means in the second exchange PBX2. During the signalling the network connection device in the first exchange also receives packets from the second exchange, which packets have the own IP-address and the same predetermined port number dedicated to signalling. When the signal processing means 24 receives signalling packets from the second exchange PBX2 it unpacks them, removes the signal structure and sends the content to the local control means 20. The local control means forwards all received signalling information to the switch control means, so that the switch control means can perform the ordinary signalling functions. During this signalling a port number pair or a channel is selected to be used for conveying the telephone call. In this way signalling has been performed over the signalling channel, procedural step 68.

The local control means in the first exchange PBX1 then selects a signal shaping means to be used and sets the signal shaping means to be associated with the previously selected port number pair and to work in a special mode for this channel. Alternatively the signal shaping means is chosen in the switch control means and the local control means is informed of this fact and associates the signal processing means with this signal shaping means. Yet another alternative is that a signal shaping means is associated with a port number pair at the original setting up of this channel. The same procedure is performed in the second exchange.

Thereafter, when all signalling has been performed and a connection is to be set up between the extensions, the first extension 52 is connected to the selected signal shaping means 22 via the switch core 40 and the signal shaping means starts to receive speech signals from the extension 52, procedural step 70. The received signals are compressed in the signal shaping means, procedural step 72, which compressed signals are then forwarded to the signal processing means 24. The compression can for example be performed using the LD-CELP compression algorithm according to the ITU-T standard G.728. The signal processing means 24 then applies a signal structure suitable for telephony over the computer network, such as UDP/IP (Unreliable Datagram Protocol/Internet Protocol), and packs these compressed signals having this structure into packets having the IP address of the network connection device of the second exchange and the selected port number of the pair, procedural step 74. These packets are thereafter sent to the second exchange PBX2 via the computer network, procedural step 76.

The method the second exchange PBX2 is working according to will in the following be explained with reference to fig. 1, 2 and 5.

First of all signalling is performed in order to set up a speech connection over the computer network, procedural step 80. This signalling is basically performed in accordance with the same protocol, for example ECMA/ISO Q-SIG, and in the same way as has previously been described. The local control means 20 has set the signal processing means 24 in advance to remove the signal structure and to forward the content of these packets, in dependence of the port number, to the local control means 20. Thereafter the two switch control means of the two exchanges PBX1 and PBX2 exchange signalling information such as selection of which channel to use. The local control means then associates a signal shaping means with the port number in the pair chosen for reception of data packets in that it sets the signal processing means to forward the content of packets having this port number to a special signal shaping means. It also sets the signal processing means to, for this port number, remove a signal structure suitable for telephony, like UDP/IP. This association of signal shaping means 22 to a port number could again have been performed when setting up the channel.

When the signalling has been performed between the two switch control means, the switch control means 42 in the second exchange PBX2 connects the extension associated with the dialled B-number, i.e. the second extension 54, to the signal shaping means 22 associated with the selected port number, procedural step 82. The signal processing means 24 then starts to receive packets having the selected port number from the first exchange PBX1, procedural step 84. The signal processing means then unpacks these packets and removes the signal structure, which signal structure is the structure suitable for telephony over computer networks such as UDP/IP, procedural step 86. The content of the packets are then forwarded to the selected signal shaping means 22 in dependence of the port number. This content is then decompressed in the signal shaping means 22 in order to obtain telephone signals having a structure suitable for switching in the switch core, procedural step 88. The structure suitable for switching is normally in the form of eight bits and decompression is performed by changing the bit rate of the signals according to a suitable decompression algorithm like LD-CELP according to the ITU-T standard G. 728. The decompressed speech signals are then connected through the switch core to the second extension 54 and thus a speech connection is set up, procedural step 90.

The description has so far only been described in one direction, with a speech connection for the first exchange PBX1 to the second exchange PBX2. During the above described signalling a second speech connection is of course set up in the opposite direction from the second exchange to the first exchange in order to obtain a duplex connection. This second connection is however set up in the same way as the first speech connection and will therefore not be further described here.

When the conversation is finished, the call is terminated in conventional fashion and then the used port numbers are indicated as being free to be used again for other telephone calls. Special information typical for a corporate network, such as the name of the person calling and other so called D-channel information that can be transferred together with a call, can be transferred in the signalling channel. As an alternative a separate D-channel can be set up using a special D-channel port number for each voice connection.

The above described method have used a selection of port numbers and setting up of channels between two exchanges trunk wise, which makes it easier to integrate the setting up of computer network channels into the normal workings of the telephone exchange, but one can also operate on a channel by channel basis. In that case the signalling channel can be set up either at start up as previously described or when a call is to be made. If the signalling channel is to be set up when a call is to be made, the switch control means can have the ability to, when analysing the B number, associate this B-number with a name. The name is then sent on to the DNS server for obtaining an IP address. The own IP address is then sent to the other exchange using this IP address received from the DNS server so that a signalling channel is set up. Negotiation of port numbers to be used for telephony is then performed over this signalling channel for one traffic channel at a time. Port number pairs are thus not formed until they are needed and they are released from each other when not used. The advantage of this way of working is that fewer port numbers are used and that a more flexible way of setting up channels between exchanges is achieved. A disadvantage is however that more complicated programs have to be implemented and a more complex network connection device is needed than in the previous embodiment.

Each exchange can comprise more than one network connection device, which each can have separate network address.

If several network connection devices are used in the same exchange for communication with another exchange it is sufficient if one performs all the signalling and the others only have traffic channels set up between them. The network connection device in charge of signalling should normally not be excluded from also setting up traffic channels.

It is not necessary for both exchanges to include network connection devices. One of the exchanges could as an alternative have been connected to the computer network via a gateway. The signalling channel set up could also have been used as a traffic channel once the signalling have been finished in which case no traffic channel would be set up. This latter approach is of course only relevant when calls over the computer network are in progress one at a time.

A traffic channel or the signalling channel when used as a traffic channel are not channels in the ordinary sense, since UDP is a connection-less type of connection. These channels do thus not have any connection to channels in time slots.

During all these previously described activities the switch control means 42 in at least one of the exchanges is monitoring the functioning of the network connection device included in this exchange by the use of the monitoring means 46. The monitoring means 46 controls the network addresses and port numbers used. These addresses and port numbers are updated when for examples changes of a corporate network is done. More exchanges can for example be added or subtracted to the network, more connections might need to be set up between two exchanges and so on. The monitoring means 46 can also be set to check the IP addresses of other exchanges as represented in the DNS server. These addresses can be changed when the network is changed like for example when it is expanded. The changes are registered in the DNS server in the process of network administration. It is very convenient to incorporate these monitoring possibilities into the normal monitoring functions of the switch control means. This adding and subtracting of addresses can be integrated with commands for initiating trunk lines, so that the computer network trunk lines can be initiated in about the same way as ordinary trunk lines. Other monitoring functions incorporated into the monitoring means 46 are logging of problems on the computer network that disrupts the telecommunication traffic such as not receiving packets and generation of alarms if these problems reach a certain level. Examples of this are if a number of packets not received during a period of time are equal to a certain amount of packets, the number of distorted packets are higher than a certain level etc. Other functions are keeping of statistics of the quality like lost packets, failed connections etc. The software in the local control means can be updated at the same time as when other software in the exchange is updated. Backup copies of the computer network trunks are also made together with security copies for normal telephone trunks etc.

By monitoring channels an exchange can, in dependence of alarms, reroute and/or deny connections through the computer network.

With the invention one obtains a telephone system that makes it possible to use a computer network for setting up telephone calls between exchanges without the use of gateways and internet service providers (ISPs) to set up the connections. One furthermore gains the additional advantage of using the monitoring functions present in the exchange in monitoring traffic over the channels. The invention is specially useful when used in interconnecting private branch exchanges via an already existing corporate computer network in order to set up telephone calls. This saves a lot of money otherwise used for leased lines or paid to ISPs or telecommunication operators. One further advantage is that, if the corporate computer network is connected to the internet, an exchange placed at a very long distance from the corporate network can connect itself to this corporate network via the internet and thereby get a telephone connection to an exchange connected to the corporate network. This might be advantageous if for example the corporate network is located in Europe and the exchange is located in the USA.

The present invention has been described in relation to voice compression. This is a preferred feature of the invention but it can optionally be left out of the exchanges. The load on the computer network gets heavier, which can lead to inferior quality. It can however be an alternative when a small local area network is used.

The invention is of course not limited to the embodiments described above and shown in the drawings but can be modified within the scope of the enclosed claims.

## Claims

1. Telephone exchange (10) for setting up telephone connections to at least one other exchange (12) via a computer network (14) and comprising a switch core (40), a switch control means (42) responsible for setting up connections between users of the exchange and at least one network connection device (44) connected between the switch core and a gate (56) of the exchange for communication with said at least one other exchange via a gateway or via at least one other network connection device;
**characterised in that** at least one of the network connection devices (44) in the exchange (10) is arranged to set up, together with the gateway or the other network connection device, a bi-directional data packet connection as a signalling channel between the switch control means (42) of the exchange (10) and a switch control means of the other exchange (12) via the computer network (14);
to send signalling information over this signalling channel;
to apply a signal structure suitable for telephony over the computer network (14) to speech signals received from the switch core (40) in order to produce data packets containing telephony; and
to send the data packets containing telephony to the other network connection device over the signalling channel or over a traffic channel that has been set up between the exchanges via the computer network (14) using signalling over the signalling channel;
wherein the switch control means (42) comprises monitoring means (46) arranged to survey and service the network connection device.

2. Telephone exchange according to claim 1, wherein the monitoring means (46) is arranged to be able to change network addresses and port numbers used in communication.

3. Telephone exchange according to claim 1, wherein the monitoring means (46) is arranged to survey and service the network connection device (44), is arranged to monitor faults occurring when sending data packets to and from the network connection device and generate alarms if such faults occur.

4. Telephone exchange according to claim 1, wherein the survey and service of the network connection device (44) comprises trunk monitoring functions.

5. Telephone exchange according to claim 1, wherein the exchange (10) is a private branch exchange.

6. Telephone exchange according to claim 1, wherein the network connection device (44) comprises a traffic channel store (19) and is arranged to receive, from the gateway or said other network connection device via the signalling channel, information about at least one port number, which port number is allocated for use in setting up one traffic channel and is further arranged to store the port number in the traffic channel store.

7. Telephone exchange according to claim 6, wherein the network connection device (44) is arranged to set up several traffic channels simultaneously before starting to send any data packets. containing telephony.

8. Telephone exchange according to claim 6, wherein the network connection device (44) is arranged to set up traffic channels one at a time in dependence of demand.

9. Telephone exchange according to claim 6, wherein the network connection device (44) is further arranged to compress digital speech signals received from the switch core (40) before applying said signal structure.

10. Telephone exchange (10) according to claim 9, wherein the network connection device (44) comprises at least one signal shaping means (22) connected to the switch core (40) and being arranged to receive signals from the switch core having a format suitable for switching in said switch core and to perform said compression on these signals, which signals are originating from a user (52) of the exchange;
one signal processing means (24) connected between each signal shaping means (22) and the gate and being arranged to receive said compressed signals from the signal shaping means (22) and to apply a signal structure suitable for sending the telephone signals on the computer network (14) and to pack these processed signals into data packets for sending on the computer network (14), where the structure comprises a port number; and
a local control means (20) connected to the switch control means (42), the signal shaping means (22) and the signal processing means (24) and being arranged to, for each signal shaping means and in dependence of control information received from the switch control means, supply the signal processing means (24) with the address of the gateway or the network connection device to which data packets are to be sent and with a port number allocated for that traffic channel,
so that the content in said data packets can be sent to the user of the other exchange in dependence of said port number.

11. Telephone exchange (10) according to claim 10, wherein the local control means (20) is arranged to supply signalling information together with network address and port number to the signal processing means (24) and to set the signal processing means to apply a signal structure to said signalling information, which structure is suitable for sending data, so that data packets containing signalling information can be sent on the computer network (14) to the other exchange.

12. Telephone exchange (10) for receiving telephone calls from at least one other exchange (12) via a computer network (14) and comprising a switch core (40), a switch control means (42) responsible for setting up connections between users of the exchange and at least one network connection device (44) connected between the switch core (40) and a gate (56) of the exchange for communication with said at least one other exchange via a gateway or via at least one other network connection device;
**characterised in that** at least one of the network connection devices (44) in the exchange (10) is arranged to set up, together with the gateway or the other network connection device, a bi-directional data packet connection as a signalling channel between the switch control means (42) of the exchange and a switch control means of the other exchange via the computer network (14);
to send signalling information over this signalling channel;
to receive, over the signalling channel or over a traffic channel set up between the exchanges (10,12) via the computer network (14) using signalling over the signalling channel, data packets containing telephony from the other network connection device;
to remove a signal structure suitable for telephony from the content of said data packets for obtaining speech signals; and
to send the speech signals to the switch core (40) for transmittal to a user (52) connected to the exchange;
wherein the switch control means (42) comprises monitoring means (46) arranged to survey and service the network connection device (44).

13. Telephone exchange according to claim 12, wherein the network connection device (44) comprises a traffic channel store (19) comprising at least one port number and is arranged to send, to the gateway or said other network connection device on said signalling channel, information about said port number, which port number is allocated for use in setting up one traffic channel.

14. Telephone exchange according to claim 13, wherein the network connection device (44) is further arranged to decompress the content of said data packets after the removal of the signal structure for obtaining the speech signals to be sent to the switch core.

15. Telephone exchange according to claim 14, wherein the network connection device (44) comprises
at least one signal processing means (24) connected to the computer network (14) via the gate (56) and being arranged to receive and unpack data packets received from the computer network and remove signal structure suitable for telephony from signals sent in these packets, where the signal structure comprises a port number;
at least one signal shaping means (22) connected between the switch core (40) and the signal processing means (24) and being arranged to receive unpacked signals from the signal processing means (24), decompress the received signals and send them to the switch core (40) in a format suitable for switching; and
a local control means (20) connected to the switch control means (42), the signal shaping means (22) and the signal processing means (24) and being arranged to connect the signal processing means to a signal shaping means in dependence of the port number contained in the signal structure of the packet in order to let a user (52) connected to the exchange (10) receive a call from another user (54) via the computer network (14).

16. Telecommunication system for setting up telephone connections between at least two exchanges via a computer network (14) and comprising at least a first and a second telephone exchange (10,12) connected to each other via the computer network, wherein each telephone exchange comprises a switch core (40), a switch control means (42) responsible for setting up connections between users (52) of the exchange and at least the first of the exchanges (10) comprises at least one first network connection device (44) connected between the switch core (40) and a gate (56), which gate is connected to the computer network (14), and the second exchange (12) is either connected to a gateway or comprises at least one second network connection device;
**characterised by** the first network connection device (44) and the gateway or the second network connection device being arranged
to set up a bi-directional data packet connection as a signalling channel between the switch control means (42) of the exchanges (10,12) via the computer network (14);
to send signalling information over this signalling channel;
by the network connection device (44) in the first exchange (10) being arranged
to apply a signal structure suitable for telephony over the computer network (14) to speech signals received from the switch core (40) in order to produce data packets containing telephony; and
to send the data packets containing telephony to the gateway or the second network connection device over the signalling channel or over a traffic channel that has been set up between the exchanges (10,12) via the computer network (14) using signalling over the signalling channel;
and by the gateway or the second network connection device being arranged
to receive, over said signalling channel or traffic channel, data packets containing telephony from the first network connection device (44);
to remove the signal structure suitable for telephony from the content of said data packets for obtaining speech signals; and
to send the speech signals to the switch core of the second exchange (12) for transmittal to a user (54) connected to the second exchange;
wherein the switch control means (42) of the first exchange comprises monitoring means (46) arranged to survey and service the first' network connection device (44).

17. Method of transmitting signals between at least a first and a second telephone exchange (10,12) using a computer network (14) comprising the steps of:
setting up a bi-directional data packet connection (30) as a signalling channel between the exchanges (10,12) via the computer network (14); and
performing signalling (68) between the exchanges (10,12) over the signalling channel,
**characterised by**
applying a signal structure (74) suitable for telephony over the computer network (14) to telephone signals to be sent from the first exchange (10) to the second exchange (12);
packing the telephone signals having said structure in packets (74), sending (76) said packets from the first exchange to the second exchange over the signalling channel or over a traffic channel that has been set up between the two exchanges via the computer network in dependence of signalling (68) performed over the signalling channel; and
surveying and servicing, in at least one of the exchanges (10,12), channels between the exchanges.

18. Method according to claim 17, wherein the servicing includes changing network addresses and port numbers used in communication for service reasons.

19. Method according to claim 17, wherein the surveying and servicing comprises trunk monitoring.

20. Method according to claim 17, comprising the step of receiving, in the first exchange (10), information about at least one port number from the second exchange (12) via the signalling channel, which port number is allocated for use in setting up one traffic channel.

21. Method according to claim 20, comprising the step of setting up several traffic channels between the exchanges (10,12) simultaneously, the number of channels set up preferably being equal to the number of channels in a trunk line.

22. Method according to claim 20, comprising the step of setting up traffic channels between the exchanges one at a time in dependence of demand.

23. Method according to claim 17, wherein the step of applying a signal structure (74) is preceded by a step of compressing (72) the telephone signals to be sent.

24. Method according to claim 23, further comprising the step of receiving (70), in a first network connection device (44) in the first exchange (10), speech signals from a first switch core of said first exchange;
and the step of applying a signal structure (74) comprises adding a for the traffic channel allocated port number to the structure, which port number points out, at least indirectly, the destination of the telephone signals to be sent.

25. Method according to claim 17, comprising the further steps of receiving, in the second exchange, the data packets from the traffic channel;
unpacking the packets;
removing the signal structure for obtaining speech signals; and sending the speech signals to a user connected to the second exchange.

26. Method according to claim 24, comprising the further steps of receiving (84), in the second exchange (12), the data packets from said traffic channel;
unpacking (86) the packets;
removing (86) the signal structure for obtaining speech signals decompressing the speech signals; and
sending (90) the decompressed speech signals to a user (54) connected to the second exchange (12).

27. Method of receiving telephone signals from a first exchange (10) in a second exchange (12) using a computer network (14) comprising the steps of:
setting up (30) a bi-directional data packet connection as a signalling channel between the exchanges (10,12) via the computer network (14); and
performing signalling (80) between the exchanges (10,12) over the signalling channel,
**characterised by**
receiving (84), in the second exchange (12), data packets sent from the first exchange (10) over the signalling channel or over a traffic channel set up between the two exchanges via the computer network (14) in dependence of signalling performed over the signalling channel;
removing (86) a signal structure suitable for telephony over the computer network (14) from the received packets in order to obtain speech signals;
sending (90) the speech signals to a user (54) connected to the second exchange (12); and
surveying and servicing, in at least one of the exchanges, channels between the exchanges (10,12).

## Patentansprüche

1. Telefonvermittlungsstelle (10) zum Einrichten von Telefonverbindungen zu zumindest einer anderen Vermittlungsstelle (12) über ein Computernetz (14), und umfassend einen Vermittlungskern (40), eine Vermittlungssteuereinrichtung (42), die für ein Einrichten von Verbindungen zwischen Benutzern der Vermittlungsstelle zuständig ist, und zumindest eine Netzverbindungsvorrichtung (44), die zwischen dem Vermittlungskern und einem Gate (56) der Vermittlungsstelle für eine Kommunikation mit der zumindest einen anderen Vermittlungsstelle über einen Gateway oder über zumindest eine andere Netzverbindungsvorrichtung verbunden ist;
**dadurch gekennzeichnet, dass** zumindest eine der Netzverbindungsvorrichtungen (44) in der Vermittlungsstelle (10) angeordnet ist,
zusammen mit dem Gateway oder der anderen Netzverbindungsvorrichtung eine bidirektionale Datenpaketverbindung als ein Signalisierungskanal zwischen der Vermittlungssteuereinrichtung (42) der Vermittlungsstelle (10) und einer Vermittlungssteuereinrichtung (42) der anderen Vermittlungsstelle (12) über das Computernetz (14) einzurichten;
eine Signalisierungsinformation über diesen Signalisierungskanal zu senden;
eine Signalstruktur, die für eine Telephonie über das Computernetz (14) geeignet ist, an Sprachsignale anzulegen, die von dem Vermittlungskern (40) empfangen werden, um Datenpakete zu erzeugen, die Telephonie enthalten; und
die Datenpakete, die Telephonie enthalten, zu der anderen Netzverbindungsvorrichtung über den Signalisierungskanal oder über einen Verkehrskanal, der zwischen den Vermittlungsstellen über das Computernetz (14) unter Verwendung einer Signalisierung über den Signalisierungskanal eingerichtet worden ist, zu senden;
wobei die Vermittlungssteuereinrichtung (42) eine Aufzeichnungseinrichtung (46) umfasst, die angeordnet ist, die Netzverbindungsvorrichtung zu überwachen und zu warten.

2. Vermittlungsstelle nach Anspruch 1, wobei die Aufzeichnungseinrichtung (46) angeordnet ist, in der Lage zu sein, Netzadressen und Anschlussnummern, die bei der Kommunikation verwendet werden, zu ändern.

3. Telefonvermittlungsstelle nach Anspruch 1, wobei die Aufzeichnungseinrichtung (46) angeordnet ist, die Netzverbindungsvorrichtung (44) zu überwachen und zu warten, um Fehler, die auftreten, wenn Datenpakete zu und von der Netzverbindungsvorrichtung gesendet werden, aufzuzeichnen, und um Alarme zu erzeugen, wenn derartige Fehler auftreten.

4. Telefonvermittlungsstelle nach Anspruch 1, wobei die Überwachung und die Wartung der Netzverbindungsvorrichtung (44) Verbindungsaufzeichnungsfunktionen umfasst.

5. Telefonvermittlungsstelle nach Anspruch 1, wobei die Vermittlungsstelle (10) eine Nebenstellenanlage ist.

6. Vermittlungsstelle nach Anspruch 1, wobei die Netzverbindungsvorrichtung (44) einen Verkehrskanalspeicher (19) umfasst und angeordnet ist, von dem Gateway oder der anderen Netzverbindungsvorrichtung über den Signalisierungskanal eine Information über zumindest eine Anschlussnummer zu empfangen, wobei die Anschlussnummer für eine Verwendung bei einem Einrichten eines Verkehrskanals zugewiesen ist, und weiter angeordnet ist, die Anschlussnummer in dem Verkehrskanalspeicher zu speichern.

7. Telefonvermittlungsstelle nach Anspruch 6, wobei die Netzverbindungsvorrichtung (44) angeordnet ist, mehrere Verkehrskanäle gleichzeitig einzurichten, bevor gestartet wird, irgendwelche Datenpakete, die Telephonie enthalten, zu senden.

8. Telefonvermittlungsstelle nach Anspruch 6, wobei die Netzverbindungsvorrichtung (44) angeordnet ist, Verkehrskanäle gleichzeitig in Abhängigkeit einer Anforderung einzurichten.

9. Telefonvermittlungsstelle nach Anspruch 6, wobei die Netzverbindungsvorrichtung (44) weiter angeordnet ist, digitale Sprachsignale, die von dem Vermittlungskern (40) empfangen werden, zu komprimieren, bevor die Signalstruktur angelegt wird.

10. Telefonvermittlungsstelle (10) nach Anspruch 9, wobei die Netzverbindungsvorrichtung (44) umfasst:
zumindest eine Signalformungseinrichtung (22), die mit dem Vermittlungskern (40) verbunden ist und angeordnet ist, Signale von dem Vermittlungskern zu empfangen, die ein Format aufweisen, das für eine Vermittlung in dem Vermittlungskern geeignet ist, und die Kompression dieser Signale durchzuführen, wobei die Signale von einem Benutzer (52) der Vermittlungsstelle herrühren;
eine Signalverarbeitungseinrichtung (24), die zwischen jeder Signalformungseinrichtung (22) und dem Gate verbunden ist, und die angeordnet ist, die komprimierten Signale von der Signalformungseinrichtung (22) zu empfangen und eine Signalstruktur, die für ein Senden der Telefonsignale auf dem Computernetz (14) geeignet ist, anzulegen und diese verarbeiteten Signale in Datenpakete zum Senden auf dem Computernetz (14) zu packen, wobei die Struktur eine Anschlussnummer umfasst; und
eine lokale Steuereinrichtung (20), die mit der Vermittlungssteuereinrichtung (42), der Signalformungseinrichtung (22) und der Signalverarbeitungseinrichtung (24) verbunden ist und die angeordnet ist, für jede Signalformungseinrichtung und in Abhängigkeit einer Steuerinformation, die von der Vermittlungssteuereinrichtung empfangen wird, der Signalverarbeitungseinrichtung (24) die Adresse des Gateways oder der Netzverbindungsvorrichtung, zu welcher Datenpakete zu senden sind, und eine Anschlussnummer, die für diesen Verkehrskanal zugewiesen ist, zuzuführen,
so dass der Inhalt in den Datenpaketen zu dem Benutzer der anderen Vermittlungsstelle in Abhängigkeit von der Anschlussnummer gesendet werden kann.

11. Telefonvermittlungsstelle (10) nach Anspruch 10, wobei die lokale Steuereinrichtung (20) angeordnet ist, der Signalverarbeitungseinrichtung (24) eine Signalisierungsinformation zusammen mit einer Netzadresse und einer Anschlussnummer zuzuführen und die Signalverarbeitungseinrichtung zu setzen, um eine Signalstruktur an die Signalisierungsinformation anzulegen, wobei die Struktur zum Senden von Daten geeignet ist, so dass Datenpakete, die die Signalisierungsinformation enthalten, auf dem Computernetz (14) zu der anderen Vermittlungsstelle gesendet werden können.

12. Telefonvermittlungsstelle (10) zum Empfangen von Telefonsignalen von zumindest einer anderen Vermittlungsstelle (12) über ein Computernetz (14), und umfassend einen Vermittlungskern (40), eine Vermittlungssteuereinrichtung (42), die für ein Einrichten von Verbindungen zwischen Benutzern der Vermittlungsstelle zuständig ist, und zumindest eine Netzverbindungsvorrichtung (44), die zwischen dem Vermittlungskern (40) und einem Gate (56) der Vermittlungsstelle für eine Kommunikation mit der zumindest einen anderen Vermittlungsstelle über einen Gateway oder über zumindest eine andere Netzverbindungsvorrichtung verbunden ist;
**dadurch gekennzeichnet, dass** zumindest eine der Netzverbindungsvorrichtungen (44) in der Vermittlungsstelle (10) angeordnet ist,
zusammen mit dem Gateway oder der anderen Netzverbindungsvorrichtung eine bidirektionale Datenpaketverbindung als ein Signalisierungskanal zwischen der Vermittlungssteuereinrichtung (42) der Vermittlungsstelle und einer Vermittlungssteuereinrichtung der anderen Vermittlungsstelle über das Computernetz (14) einzurichten;
eine Signalisierungsinformation über diesen Signalisierungskanal zu senden;
über den Signalisierungskanal oder über einen Verkehrskanal, der zwischen den Vermittlungsstellen (10, 12) über das Computernetz (14) unter Verwendung einer Signalisierung über den Signalisierungskanal eingerichtet ist, Datenpakete, die Telephonie enthalten, von der anderen Netzverbindungsvorrichtung zu empfangen;
eine Signalstruktur, die für eine Telephonie geeignet ist, von dem Inhalt der Datenpakete zu entfernen, um Sprachsignale zu erhalten; und
die Sprachsignale zu dem Vermittlungskern (40) für eine Übertragung zu einem Benutzer (52), der mit der Vermittlungsstelle verbunden ist, zu senden;
wobei die Vermittlungssteuereinrichtung (42) eine Aufzeichnungseinrichtung (46) umfasst, die angeordnet ist, die Netzverbindungsvorrichtung (44) zu überwachen und zu warten.

13. Telefonvermittlungsstelle nach Anspruch 12, wobei die Netzverbindungsvorrichtung (44) einen Verkehrskanalspeicher (19) umfasst, der zumindest eine Anschlussnummer umfasst und angeordnet ist, auf dem Signalisierungskanal zu dem Gateway oder der anderen Netzverbindungsvorrichtung eine Information über die Anschlussnummer zu senden, wobei die Anschlussnummer für eine Verwendung bei einem Einrichten eines Verkehrskanals zugewiesen ist.

14. Telefonvermittlungsstelle nach Anspruch 13, wobei die Netzverbindungsvorrichtung (44) weiter angeordnet ist, den Inhalt der Datenpakete nach einer Entfernung der Signalstruktur zu dekomprimieren, um die Sprachsignale zu erhalten, die zu dem Vermittlungskern zu senden sind.

15. Telefonvermittlungsstelle nach Anspruch 14, wobei die Netzverbindungsvorrichtung (44) umfasst:
zumindest eine Signalverarbeitungseinrichtung (24), die mit dem Computernetz (14) über das Gate (56) verbunden ist, und angeordnet ist, Datenpakete, die von dem Computernetz empfangen werden, zu empfangen und zu entpacken, und eine Signalstruktur, die für eine Telephonie geeignet ist, von den Signalen zu entfernen, die in diesen Paketen gesendet werden, wobei die Signalstruktur eine Anschlussnummer umfasst;
zumindest eine Signalformungseinrichtung (22), die zwischen dem Vermittlungskern (40) und der Signalverarbeitungseinrichtung (24) verbunden ist, und die angeordnet ist, entpackte Signale von der Signalverarbeitungseinrichtung (24) zu empfangen, um die empfangenen Signale zu dekomprimieren und um sie zu dem Vermittlungskern (40) in einem Format zu senden, das für eine Vermittlung geeignet ist; und
eine lokale Steuereinrichtung (20), die mit der Vermittlungssteuereinrichtung (42), der Signalformungseinrichtung (22) und der Signalverarbeitungseinrichtung (24) verbunden ist, und die angeordnet ist, die Signalverarbeitungseinrichtung mit einer Signalformungseinrichtung in Abhängigkeit von der Anschlussnummer zu verbinden, die in der Signalstruktur des Pakets enthalten ist, um es einem Benutzer (52), der mit der Vermittlungsstelle (10) verbunden ist, zu ermöglichen, einen Anruf von einem anderen Benutzer (54) über das Computernetz (14) zu empfangen.

16. Telekommunikationssystem zum Einrichten von Telefonverbindungen zwischen zumindest zwei Vermittlungsstellen über ein Computernetz (14), und umfassend zumindest eine erste und eine zweite Telefonvermittlungsstelle (10, 12), die miteinander über das Computernetz verbunden sind, wobei jede Telefonvermittlungsstelle einen Vermittlungskern (40), einer Vermittlungssteuereinrichtung (42), die für ein Einrichten von Verbindungen zwischen Benutzern (52) der Vermittlungsstelle zuständig ist, umfasst, und zumindest die erste der Vermittlungsstellen (10) zumindest eine erste Netzverbindungsvorrichtung (44) umfasst, die zwischen dem Vermittlungskern (40) und einem Gate 856) verbunden ist, wobei das Gate mit dem Computernetz (14) verbunden ist und die zweite Vermittlungsstelle (12) entweder mit einem Gateway verbunden ist oder zumindest eine zweite Netzverbindungsvorrichtung umfasst;
**dadurch gekennzeichnet,**
**dass** die erste Netzverbindungsvorrichtung (44) und der Gateway oder die zweite Netzverbindungsvorrichtung angeordnet sind,
eine bidirektionale Datenpaketverbindung als einen Signalisierungskanal zwischen der Vermittlungssteuereinrichtung (42) der Vermittlungsstellen (10, 12) über das Computernetz (14) einzurichten; und
eine Signalisierungsinformation über diesen Signalisierungskanal zu senden;
**dass** die Netzverbindungsvorrichtung (44) in der ersten Vermittlungsstelle (10) angeordnet ist,
eine Signalstruktur, die für eine Telephonie über das Computernetz (14) geeignet ist, an Sprachsignale, die von dem Vermittlungskern (40) empfangen werden, anzulegen, um Datenpakete, die Telephonie enthalten, anzulegen; und
die Datenpakete, die Telephonie enthalten, zu dem Gateway oder der zweiten Netzverbindungsvorrichtung über den Signalisierungskanal oder über einen Verkehrskanal, der zwischen den Vermittlungsstellen (10, 12) über das Computernetz (14) unter Verwendung einer Signalisierung über den Signalisierungskanal eingerichtet worden ist, zu senden;
und **dass** der Gateway oder die zweite Netzverbindungsvorrichtung angeordnet ist,
über den Signalisierungskanal oder den Verkehrskanal Datenpakete, die Telephonie enthalten, von der ersten Netzverbindungsvorrichtung (44) zu empfangen;
die Signalstruktur, die für eine Telephonie geeignet ist, von dem Inhalt der Datenpakete zu entfernen, um Sprachsignale zu erhalten; und
die Sprachsignale zu dem Vermittlungskern der zweiten Vermittlungsstelle (12) für eine Übertragung zu einem Benutzer (54), der mit der zweiten Vermittlungsstelle verbunden ist, zu senden;
wobei die Vermittlungssteuereinrichtung (42) der ersten Vermittlungsstelle eine Aufzeichnungseinrichtung (46) umfasst, die angeordnet ist, die erste Netzverbindungsvorrichtung (44) zu überwachen und zu warten.

17. Verfahren zum Übertragen von Signalen zwischen zumindest einer ersten und einer zweiten Telefonvermittlungsstelle (10, 12) unter Verwendung eines Computernetzes (14), umfassend die Schritte:
eines Einrichtens einer bidirektionalen Datenpaketverbindung (30) als ein Signalisierungskanal zwischen den Vermittlungsstellen (10, 12) über das Computernetz (14); und
eines Durchführens einer Signalisierung (68) zwischen den Vermittlungsstellen (10, 12) über den Signalisierungskanal,
**gekennzeichnet durch**
ein Anlegen einer Signalstruktur (74), die für eine Telephonie über das Computernetz (14) geeignet ist, an Telefonsignale, die von der ersten Vermittlungsstelle (10) zu der zweiten Vermittlungsstelle (12) zu senden sind;
ein Packen der Telefonsignale, die die Struktur aufweisen, in Pakete (74),
ein Senden (76) der Pakete von der ersten Vermittlungsstelle zu der zweiten Vermittlungsstelle über den Signalisierungskanal oder über einen Verkehrskanal, der zwischen den beiden Vermittlungsstellen über das Computernetz in Abhängigkeit der Signalisierung, die über den Signalisierungskanal durchgeführt wird, eingerichtet worden ist; und
ein Überwachen und ein Warten, in zumindest einer der Vermittlungsstellen (10, 12), von Kanälen zwischen den Vermittlungsstellen.

18. Verfahren nach Anspruch 17, wobei das Warten ein Ändern von Netzadressen und Anschlussnummern einschließt, die bei einer Kommunikation aus Wartungsgründen verwendet werden.

19. Verfahren nach Anspruch 17, wobei das Überwachen und das Warten eine Verbindungsaufzeichnung umfasst.

20. Verfahren nach Anspruch 17, umfassend den Schritt eines Empfangens, in der ersten Vermittlungsstelle (10), einer Information über die zumindest eine Anschlussnummer von der zweiten Vermittlungsstelle (12) über den Signalisierungskanal, wobei die Anschlussnummer für eine Verwendung bei einem Einrichten eines Verkehrskanals zugewiesen ist.

21. Verfahren nach Anspruch 20, umfassend den Schritt eines gleichzeitigen Einrichtens mehrerer Verkehrskanäle zwischen den Vermittlungsstellen (10, 12), wobei die Anzahl von Kanälen vorzugsweise gleich der Anzahl von Kanälen in einer Verbindungsleitung eingerichtet wird.

22. Verfahren nach Anspruch 20, umfassen den Schritt eines Einrichtens von Verkehrskanälen zwischen den Vermittlungsstellen nacheinander in Abhängigkeit einer Anforderung.

23. Verfahren nach Anspruch 17, wobei dem Schritt eines Anlegens einer Signalstruktur (74) ein Schritt eines Komprimierens (72) der zu sendenden Telefonsignale vorangestellt ist.

24. Verfahren nach Anspruch 23, weiter umfassend den Schritt eines Empfangens (70), in einer ersten Netzverbindungsvorrichtung (44) in der ersten Vermittlungsstelle (10), von Sprachsignalen von einem ersten Vermittlungskern der ersten Vermittlungsstelle;
und wobei der Schritt eines Anlegens einer Signalstruktur (74) ein Hinzufügen einer für den Verkehrskanal zugewiesenen Anschlussnummer zu der Struktur umfasst, wobei die Anschlussnummer zumindest indirekt zu dem Bestimmungsort der zu sendenden Telefonsignale weist.

25. Verfahren nach Anspruch 17, umfassend die weiteren Schritte
eines Empfangens, in der zweiten Vermittlungsstelle, von Datenpaketen von dem Verkehrskanal;
eines Entpackens der Pakete; '
eines Entfernens der Signalstruktur, um Sprachsignale zu erhalten; und
eines Sendens der Sprachsignale zu einem Benutzer, der mit der zweiten Vermittlungsstelle verbunden ist.

26. Verfahren nach Anspruch 24, umfassend die weiteren Schritte
eines Empfangens (84), in der zweiten Vermittlungsstelle (12), von Datenpaketen von dem Verkehrskanal;
eines Entpackens (86) der Pakete;
eines Entfernens (86) der Signalstruktur, um Sprachsignale zu erhalten;
eines Dekomprimierens der Sprachsignale; und
eines Sendens (90) der dekomprimierten Sprachsignale zu einem Benutzer (54), der mit der zweiten Vermittlungsstelle (12) verbunden ist.

27. Verfahren zum Empfangen von Telefonsignalen von einer ersten Vermittlungsstelle (10) in einer zweiten Vermittlungsstelle (12) unter Verwendung eines Computernetzes (14), umfassend die Schritte:
eines Einrichtens (30) einer bidirektionalen Datenpaketverbindung als ein Signalisierungskanal zwischen den Vermittlungsstellen (10, 12) über das Computernetz (14); und
eines Durchführens einer Signalisierung (80) zwischen den Vermittlungsstellen (10, 12) über den Signalisierungskanal,
**gekennzeichnet durch**
ein Empfangen (84), in der zweiten Vermittlungsstelle (12), von Datenpaketen, die von der ersten Vermittlungsstelle (10) über den Signalisierungskanal oder über einen Verkehrskanal, der zwischen den beiden Vermittlungsstellen über das Computernetz (14) in Abhängigkeit einer Signalisierung, die über den Signalisierungskanal durchgeführt wird, eingerichtet ist, gesendet werden;
ein Entfernen (86) einer Signalstruktur, die für eine Telephonie über das Computernetz (14) geeignet ist, von den empfangenen Paketen, um Sprachsignale zu erhalten;
ein Senden (90) der Sprachsignale zu einem Benutzer (54), der mit der zweiten Vermittlungsstelle (12) verbunden ist; und
ein Überwachen und ein Warten, in zumindest einer der Vermittlungsstellen, von Kanälen zwischen den Vermittlungsstellen (10, 12).

## Revendications

1. Central téléphonique (10) pour établir des connexions téléphoniques avec au moins un autre central (12) par l'intermédiaire d'un réseau informatique (14) et comprenant un coeur de commutateur (40), un moyen de commande de commutateur (42), responsable de l'établissement de connexions entre des utilisateurs du central et au moins un dispositif de connexion de réseau (44) connecté entre le coeur de commutateur et un accès (56) du central pour la communication avec l'au moins un autre central par l'intermédiaire d'une passerelle ou par l'intermédiaire d'au moins un autre dispositif de connexion de réseau;
**caractérisé en ce que** l'un au moins des dispositifs de connexion de réseau (44) dans le central (10) est adapté pour établir, conjointement à la passerelle ou à l'autre dispositif de connexion de réseau, une connexion de paquets de données bidirectionnelle sous la forme d'un canal de signalisation entre le moyen de commande de commutateur (42) du central (10) et un moyen de commande de commutateur de l'autre central (12), par l'intermédiaire du réseau informatique (14);
pour envoyer de l'information de signalisation sur ce canal de signalisation;
pour appliquer une structure de signal appropriée pour la téléphonie sur le réseau informatique (14), à des signaux de parole reçus à partir du coeur de commutateur (40), afin de produire des paquets de données contenant de la téléphonie; et
pour envoyer les paquets de données contenant de la téléphonie à l'autre dispositif de connexion de réseau sur le canal de signalisation ou sur un canal de trafic qui a été établi entre les centraux par l'intermédiaire du réseau informatique (14), en utilisant une signalisation sur le canal de signalisation;
dans lequel le moyen de commande de commutateur (42) comprend un moyen de surveillance (46) adapté pour effectuer la supervision et le service du dispositif de connexion de réseau.

2. Central téléphonique selon la revendication 1, dans lequel le moyen de surveillance (46) est adapté pour être capable de changer des adresses de réseau et des numéros de port utilisés dans la communication.

3. Central téléphonique selon la revendication 1, dans lequel le moyen de surveillance (46) est adapté pour effectuer la supervision et le service du dispositif de connexion de réseau (44), et est adapté pour surveiller des défauts se produisant pendant l'envoi de paquets de données vers le dispositif de connexion de réseau et à partir de celui-ci, et pour générer des alarmes si de tels défauts se produisent.

4. Central téléphonique selon la revendication 1, dans lequel la supervision et le service du dispositif de connexion de réseau (44) comprennent des fonctions de surveillance de jonction.

5. Central téléphonique selon la revendication 1, dans lequel le central (10) est un central privé.

6. Central téléphonique selon la revendication 1, dans lequel le dispositif de connexion de réseau (44) comprend une mémoire de canaux de trafic (19) et est adapté pour recevoir, de la passerelle ou de l'autre dispositif de connexion de réseau par l'intermédiaire du canal de signalisation, de l'information concernant au moins un numéro de port, ce numéro de port étant alloué pour l'utilisation dans l'établissement d'un canal de trafic, et est en outre adapté pour stocker le numéro de port dans la mémoire de canaux de trafic.

7. Central téléphonique selon la revendication 6, dans lequel le dispositif de connexion de réseau (44) est adapté pour établir simultanément plusieurs canaux de trafic avant de commencer à envoyer des paquets de données quelconques contenant de la téléphonie.

8. Central téléphonique selon la revendication 6, dans lequel le dispositif de connexion de réseau (44) est adapté pour établir des canaux de trafic un à la fois, à la demande.

9. Central téléphonique selon la revendication 6, dans lequel le dispositif de connexion de réseau (44) est en outre adapté pour compresser des signaux de parole numériques reçus à partir du coeur de commutateur (40), avant d'appliquer ladite structure de signal.

10. Central téléphonique (10) selon la revendication 9, dans lequel le dispositif de connexion de réseau (44) comprend
au moins un moyen de mise en forme de signal (22) connecté au coeur de commutateur (40) et adapté pour recevoir des signaux provenant du coeur de commutateur ayant un format approprié pour la commutation dans le coeur de commutateur, et pour effectuer ladite compression sur ces signaux, ces signaux provenant d'un utilisateur (52) du central;
un moyen de traitement de signal (24) connecté entre chaque moyen de mise en forme de signal (22) et l'accès, et étant adapté pour recevoir les signaux compressés provenant du moyen de mise en forme de signal (22) et pour appliquer une structure de signal appropriée pour envoyer les signaux téléphoniques sur le réseau informatique (14) et pour assembler ces signaux traités en paquets de données pour l'envoi sur le réseau informatique (14), la structure comprenant un numéro de port; et
un moyen de commande locale (20) connecté au moyen de commande de commutateur (42), au moyen de mise en forme de signal (22) et au moyen de traitement de signal (24) et qui, pour chaque moyen de mise en forme de signal et sous la dépendance d'une information de commande reçue du moyen de commande de commutateur, est adapté pour fournir au moyen de traitement de signal (24) l'adresse de la passerelle ou du dispositif de connexion de réseau auquel des paquets de données doivent être envoyés, et un numéro de port alloué pour ce canal de trafic,
de façon que le contenu des paquets de données puisse être envoyé à l'utilisateur de l'autre central sous la dépendance de ce numéro de port.

11. Central téléphonique (10) selon la revendication 10, dans lequel le moyen de commande locale (20) est adapté pour fournir au moyen de traitement de signal (24) de l'information de signalisation conjointement à une adresse de réseau et un numéro de port, et pour conditionner le moyen de traitement de signal de façon à appliquer une structure de signal à l'information de signalisation, cette structure étant appropriée pour envoyer des données, de façon que des paquets de données contenant de l'information de signalisation puissent être envoyés à l'autre central sur le réseau informatique (14).

12. Central téléphonique (10) pour recevoir des appels téléphoniques provenant d'au moins un autre central (12) par l'intermédiaire d'un réseau informatique (14) et comprenant un coeur de commutateur (40), un moyen de commande de commutateur (42), responsable de l'établissement de connexions entre des utilisateurs du central et au moins un dispositif de connexion de réseau (44) connecté entre le coeur de commutateur (40) et un accès (56) du central, pour la communication avec l'au moins un autre central par l'intermédiaire d'une passerelle ou par l'intermédiaire d'au moins un autre dispositif de connexion de réseau;
**caractérisé en ce que** l'un au moins des dispositifs de connexion de réseau (44) dans le central (10) est adapté pour établir, conjointement à la passerelle ou à l'autre dispositif de connexion de réseau, une connexion de paquets de données bidirectionnelle sous la forme d'un canal de signalisation entre le moyen de commande de commutateur (42) du central et un moyen de commande de commutateur de l'autre central, par l'intermédiaire du réseau informatique (14) ;
pour envoyer de l'information de signalisation sur ce canal de signalisation;
pour recevoir, sur le canal de signalisation ou sur un canal de trafic établi entre les centraux (10, 12) par l'intermédiaire du réseau informatique (14) en utilisant de la signalisation sur le canal de signalisation, des paquets de données contenant de la téléphonie, provenant de l'autre dispositif de connexion de réseau;
pour supprimer du contenu des paquets de données une structure de signal appropriée pour la téléphonie, de façon à obtenir des signaux de parole; et
pour envoyer les signaux de parole au coeur de commutateur (40) pour la transmission à un utilisateur (52) connecté au central;
dans lequel le moyen de commande de commutateur (42) comprend un moyen de surveillance (46) adapté pour effectuer la supervision et le service du dispositif de connexion de réseau (44) .

13. Central téléphonique selon la revendication 12, dans lequel le dispositif de connexion de réseau (44) comprend une mémoire de canaux de trafic (19) comprenant au moins un numéro de port et est adapté pour envoyer, à la passerelle ou à l'autre dispositif de connexion de réseau, sur le canal de signalisation, une information concernant le numéro de port, ce numéro de port étant alloué pour l'utilisation dans l'établissement d'un canal de trafic.

14. Central téléphonique selon la revendication 13, dans lequel le dispositif de connexion de réseau (44) est en outre adapté pour décompresser le contenu des paquets de données après la suppression de la structure de signal, pour obtenir les signaux de parole à envoyer au coeur de commutateur.

15. Central téléphonique selon la revendication 14, dans lequel le dispositif de connexion de réseau (44) comprend
au moins un moyen de traitement de signal (24) connecté au réseau informatique (14) par l'intermédiaire de l'accès (56) et étant adapté pour recevoir et désassembler des paquets de données reçus du réseau informatique, et supprimer la structure de signal appropriée pour la téléphonie dans des signaux envoyés dans ces paquets, la structure de signal comprenant un numéro de port;
au moins un moyen de mise en forme de signal (22) connecté entre le coeur de commutateur (40) et le moyen de traitement de signal (24) et étant adapté pour recevoir des signaux désassemblés provenant du moyen de traitement de signal (24), décompresser les signaux reçus et les envoyer au coeur de commutateur (40) en un format approprié pour la commutation; et
un moyen de commande locale (20) connecté au moyen de commande de commutateur (42), au moyen de mise en forme de signal (22) et au moyen de traitement de signal (24), et étant adapté pour connecter le moyen de traitement de signal à un moyen de mise en forme de signal, sous la dépendance du numéro de port contenu dans la structure de signal du paquet, afin de permettre à un utilisateur (52) connecté au central (10) de recevoir un appel provenant d'un autre utilisateur (54) par l'intermédiaire du réseau informatique (14).

16. Système de télécommunication pour établir des connexions téléphoniques entre au moins deux centraux par l'intermédiaire d'un réseau informatique (14), et comprenant au moins un premier et un second central téléphonique (10, 12) connectés l'un à l'autre par l'intermédiaire du réseau informatique, dans lequel chaque central téléphonique comprend
un coeur de commutateur (40), un moyen de commande de commutateur (42) responsable de l'établissement de connexions entre des utilisateurs (52) du central et au moins le premier des centraux (10) comprenant au moins un premier dispositif de connexion de réseau (44) connecté entre le coeur de commutateur (40) et un accès (56), cet accès étant connecté au réseau informatique (14), et le second central (12) étant connecté à une passerelle ou bien comprenant au moins un second dispositif de connexion de réseau;
**caractérisé en ce que** le premier dispositif de connexion de réseau (44) et la passerelle ou le second dispositif de connexion de réseau sont adaptés
pour établir une connexion de paquets de données bidirectionnelle sous la forme d'un canal de signalisation entre le moyen de commande de commutateur (42) des centraux (10, 12), par l'intermédiaire du réseau informatique (14) ;
pour envoyer de l'information de signalisation sur ce canal de signalisation;
**en ce que** le dispositif de connexion de réseau (44) dans le premier central (10) est adapté
pour appliquer une structure de signal appropriée pour la téléphonie sur le réseau informatique (14) à des signaux de parole reçus du coeur de commutateur (40), afin de produire des paquets de données contenant de la téléphonie; et
pour envoyer les paquets de données contenant de la téléphonie vers la passerelle ou le second dispositif de connexion de réseau, sur le canal de signalisation ou sur un canal de trafic qui a été établi entre les centraux (10, 12) par l'intermédiaire du réseau informatique (14), en utilisant une signalisation sur le canal de signalisation;
et **en ce que** la passerelle ou le second dispositif de connexion de réseau est adapté
pour recevoir, sur le canal de signalisation ou le canal de trafic, des paquets de données contenant de la téléphonie, provenant du premier dispositif de connexion de réseau (44) ;
pour supprimer la structure de signal appropriée pour la téléphonie dans le contenu des paquets de données, pour obtenir des signaux de parole; et
pour envoyer les signaux de parole au coeur de commutateur du second central (12), pour la transmission à un utilisateur (54) connecté au second central;
dans lequel le moyen de commande de commutateur (42) du premier central comprend un moyen de surveillance (46) adapté pour effectuer la supervision et le service du premier dispositif de connexion de réseau (44).

17. Procédé de transmission de signaux entre au moins un premier et un second central téléphonique (10, 12) utilisant un réseau informatique (14), comprenant les étapes suivantes :
on établit une connexion de paquets de données bidirectionnelle (30) sous la forme d'un canal de signalisation entre les centraux (10, 12), par l'intermédiaire du réseau informatique (14); et
on effectue une signalisation (68) entre les centraux (10, 12) sur le canal de signalisation,
**caractérisé en ce que**
on applique une structure de signal (74) appropriée pour la téléphonie sur le réseau informatique (14) à des signaux téléphoniques à envoyer du premier central (10) au second central (12);
on assemble en paquets les signaux téléphoniques ayant ladite structure (74), on envoie (76) les paquets du premier central vers le second central sur le canal de signalisation ou sur un canal de trafic qui a été établi entre les deux centraux par l'intermédiaire du réseau informatique, sous la dépendance de la signalisation (68) effectuée sur le canal de signalisation; et
on effectue la supervision et le service, dans l'un au moins des centraux (10, 12), des canaux entre les centraux.

18. Procédé selon la revendication 17, dans lequel le service comprend le changement d'adresses de réseau et de numéros de port utilisés dans la communication pour des raisons de service.

19. Procédé selon la revendication 17, dans lequel la supervision et le service comprennent la surveillance de jonction.

20. Procédé selon la revendication 17, comprenant l'étape de réception, dans le premier central (10), d'une information concernant au moins un numéro de port provenant du second central (12) par l'intermédiaire du canal de signalisation, ce numéro de port étant alloué pour l'utilisation dans l'établissement d'un canal de trafic.

21. Procédé selon la revendication 20, comprenant l'étape consistant à établir simultanément plusieurs canaux de trafic entre les centraux (10, 12), le nombre de canaux établis étant de préférence égal au nombre de canaux dans une jonction.

22. Procédé selon la revendication 20, comprenant l'étape qui consiste à établir des canaux de trafic entre les centraux un à la fois, à la demande.

23. Procédé selon la revendication 17, dans lequel l'étape d'application d'une structure de signal (74) est précédée par une étape de compression (72) des signaux téléphoniques à envoyer.

24. Procédé selon la revendication 23, comprenant en outre l'étape de réception (70), dans un premier dispositif de connexion de réseau (44) dans le premier central (10), de signaux de parole provenant d'un premier coeur de commutateur du premier central;
et l'étape d'application d'une structure de signal (74) comprend
l'ajout à la structure d'un numéro de port alloué pour le canal de trafic, ce numéro de port désignant, au moins indirectement, la destination des signaux téléphoniques à envoyer.

25. Procédé selon la revendication 17, comprenant les étapes supplémentaires de
réception, dans le second central, des paquets de données provenant du canal de trafic;
désassemblage des paquets;
suppression de la structure de signal pour obtenir des signaux de parole; et
envoi des signaux de parole à un utilisateur connecté au second central.

26. Procédé selon la revendication 24, comprenant les étapes supplémentaires de
réception (84), dans le second central (12), des paquets de données provenant du canal de trafic;
désassemblage (86) des paquets;
suppression (86) de la structure de signal pour obtenir des signaux de parole;
décompression des signaux de parole; et
envoi (90) des signaux de parole décompressés à un utilisateur (54) connecté au second central (12).

27. Procédé de réception de signaux téléphoniques provenant d'un premier central (10) dans un second central (12) en utilisant un réseau informatique (14), comprenant les étapes suivantes :
on établit (30) une connexion de paquets de données bidirectionnelle sous la forme d'un canal de signalisation entre les centraux (10, 12) par l'intermédiaire du réseau informatique (14); et
on effectue une signalisation (80) entre les centraux (10, 12) sur le canal de signalisation,
**caractérisé en ce que**
on reçoit (84), dans le second central (12), des paquets de données envoyés par le premier central (10) sur le canal de signalisation ou sur un canal de trafic établi entre les deux centraux, par l'intermédiaire du réseau informatique (14), sous la dépendance de la signalisation effectuée sur le canal de signalisation;
on supprime (86) des paquets reçus une structure de signal appropriée pour la téléphonie sur le réseau informatique (14), afin d'obtenir des signaux de parole;
on envoie (90) les signaux de parole à un utilisateur (54) connecté au second central (12); et
on effectue la supervision et le service, dans l'un au moins des centraux, des canaux entre les centraux (10, 12).
